# EUROPEAN PATENT APPLICATION

(11) **EP 4 528 345 A1**
(43) Date of publication of application: **26.03.2025**
(21) Application number: 23306563.0
(22) Date of filing: 20.09.2023
(51) Int. Cl.: G02B 6/44, H02G 3/14, E05D 15/50

(54) **TELECOMMUNICATION ENCLOSURE**

(71) Applicant: Aginode Group, 75001 Paris (FR)
(72) Inventor: DI SEGNI, Nicolas, 75020 Paris (FR)
(74) Representative: Ipsilon

(57) **Abstract**

An enclosure (100), in particular a telecommunication enclosure, is suggested. The enclosure comprises a base (101) and a cover (102), which is pivotably mounted on the base by a hinge. The enclosure comprises on at least three sides connection components (103a-d) for connecting the cover with the base. Each connection component incorporates a connection bracket (114) removably attached to the base and the cover allowing for a pivotable movement of the cover relative to the base when the connection bracket is attached to the base and the cover. The cover (102) of the enclosure can be opened along a pivot axis that is parallel to one of the three sides of the enclosure where the connection components are arranged. The opening direction of the cover is not predefined and can be chosen at any time.

## Description

### Field

The present disclosure relates an enclosure, in particular to a telecommunication enclosure, comprising a base and a cover. The cover is pivotably connected with the base, wherein the location of the hinge axis is selectable by the user even after installation of the enclosure.

### Background

High-speed Internet access is systematically spreading in Europe. Most of the times, homes, office buildings and industrial sites are connected with an optical fiber as a network access. This approach delivers the highest possible speed of Internet connection and is frequently denominated as "fiber to the home (FTTH)" and "fiber to the office (FTTO)", respectively. The optical fiber that connects the building with a wide area network needs to be connected with one or several network access devices located in the building. The necessary connection between the external optical fiber cable associated with the network provider and one or several cables within the building is established inside a telecommunication enclosure ("connection box") that protects the one or several connections from environmental influences. To this end, the connection box is typically mounted at the bottom outside of the building.

Conventional telecommunication enclosures comprise a base and a cover that is pivotably connected with the base by means of a hinge. Some connection boxes offer the possibility to adapt an opening direction (axis of the hinge) of the installation box to different installation situations. However, the opening direction must be defined before the box is installed.

For instance, US 2021/0119424 A1 discloses a telecommunication enclosure comprising a base and a cover. The base and the cover are firmly closed by latches to ensure that a seal between the base and the cover properly tightens the interior of the enclosure. Members separate from the enclosure are provided to realize a hinge between the base and the cover of the enclosure. The user can select one of two longitudinal sides of the enclosure where a hinge is arranged.

However, the flexibility of known boxes regarding their capabilities to adapt to different installation situations remains to be limited.

In view of the limitations of existing telecommunication enclosures, there remains a desire for a telecommunication enclosure to overcome or at least improve one or more of the problems mentioned at the outset.

### Summary

According to a first aspect the present disclosure suggests an enclosure, in particular a telecommunication enclosure, comprising a base and a cover, which is pivotably mounted on the base by a hinge. The enclosure comprises on at least three sides connection components for connecting the cover with the base. Each connection component comprises a connection bracket removably attached to the base and the cover allowing for a pivotable movement of the cover relative to the base when the connection bracket is attached to the base and the cover.

The enclosure can be opened by pivoting the cover around a pivot axis that is parallel to one side of the three sides of the enclosure where the connection component is provided. Thus, the enclosure offers a high degree of flexibility facilitating the installation of cable connections by a service person. The pivot axis of the cover defined by at least one connection bracket is perpendicular to the pivot axis defined by the other connection brackets. In this geometry one connection component blocks the pivotal movement of the other connection components. In this way, the cover is firmly connected with the base of the enclosure. Only if the connection brackets of the connection components on two sides of the cover are removed, the cover can be hinged around the pivot axis parallel to the remaining third side of the enclosure. Thus, the connection components serve two different functions at the same time, namely, a connection function for firmly attaching the cover to the base and a hinge function or enabling the cover to be hinged open. The connection function is achieved when all connection brackets, or at least the connection brackets on two sides of the enclosure, are mounted. The hinge function is enabled when one or several connection brackets on only one side of the enclosure are mounted while the connection brackets on the other sides of the enclosure are removed or at least detached from the base or the cover. The opening direction of the cover is not predefined and can be chosen at any time.

In an advantageous embodiment on one or several of the three sides of the enclosure more than one connection component is provided. Obviously, providing more than one connection component enhances mechanical stability of the pivotable connection between the cover and the base. Mechanical stability becomes increasingly important with an increasing size of the enclosure.

In a preferred embodiment each connection bracket comprises two interconnection axes. The interconnection axes are essential for enabling a pivotal movement of the cover relative to the base.

Advantageously, cover cantilevers are arranged on the cover and base cantilevers are arranged on the base for interacting with the connection bracket. The cover and base cantilevers keep the connection axes at a distance of the sidewalls of the enclosure and enable in this way the pivotable movement of the cover relative to the base.

In a further embodiment an unlocking lever is provided to release the connection bracket. Releasing the connection bracket is a prerequisite for enabling the transition between the locking function and the hinge function of the connection bracket.

Advantageously, the connection bracket comprises a middle piece and legs interconnected by the interconnection axis.

In a preferred embodiment the legs of the connection bracket have slits for accepting a flat profile connected with the cover and the base, respectively. The interaction between the slit and the flat profile achieves a positive connection between the connection bracket on one side and the cover and the base on the other side. The flat profile is a part of the cover and/or base cantilever for instance. This positive connection prevents the cover from falling down due to gravity when the pivot axis for opening the cover is aligned vertically. This is an important feature for facilitating the work of the service person who opens the enclosure for installing a telecommunication connection or taking care of the maintenance of such telecommunication connection.

In a useful embodiment the cover and base cantilevers are provided with freely accessible support surfaces interacting with surfaces of the interconnection axis. The freely accessible support surfaces enable on the one hand the pivotable movement of the cover relative to the base and on the other hand that the connection bracket can be detached from the cover and base cantilevers.

With advantage the interconnection axes have a half cylindrical shape. The half cylindrical shape of the interconnection axes facilitates insertion of the interconnection bracket when it is mounted on the cover cantilevers and/or base cantilevers.

Advantageously, a lock is provided on one of the sides of the enclosure. The lock requires a mechanical or electrical key to open the lock and prevents unauthorized access to the interior of the enclosure. In this way security of the telecommunication connection is assured.

It has been found to be useful when the enclosure is made from weather resistant and/or insulating plastic material.

In an advantageous embodiment, a seal between the cover and the base of the enclosure is provided to prevent ingress of humidity and dust into the inside of the enclosure.

Further advantages of the enclosure according to the present disclosure will become apparent when reading the detailed description of an embodiment in connection with the accompanying drawing.

### Brief description of the drawings

Exemplary embodiments of the present disclosure are illustrated in the drawings and are explained in more detail in the following description. In the figures, the same or similar elements are referenced with the same or similar reference signs. It shows:
- Fig. 1A: a perspective top view of a closed telecommunication enclosure according to the present disclosure;
- Fig. 1B: the box of Figure 1A in an open state;
- Fig. 1C: a perspective view of an enlarged portion of the telecommunication enclosure of Figure 1A with a fully mounted connection bracket;
- Fig. 1D: a perspective view of an enlarged portion of the telecommunication enclosure of Figure 1A with a partially mounted connection bracket;
- Fig. 2A: an enlarged portion of a disassembled connections component;
- Fig. 2B: the connection component of Figure 2A in a partially mounted state;
- Fig. 2C: the connection component of Figure 2A in a partially mounted state; and
- Figs. 3A,3B: enlarged perspective views of a connection bracket.

### Detailed description

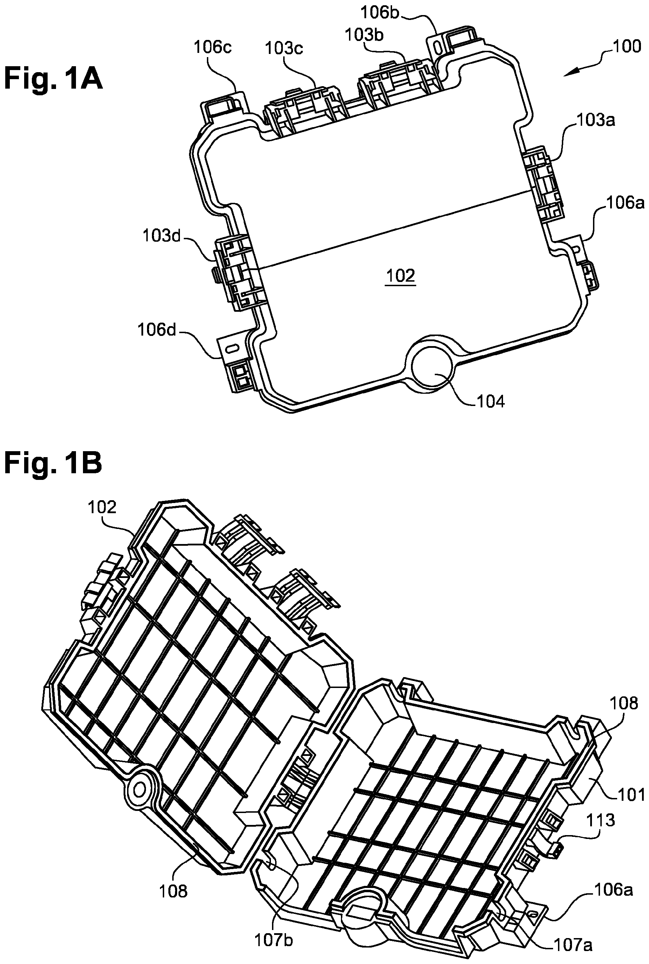

An embodiment of the present disclosure is described in the following with reference to Figures 1A-1C. The enclosure 100 comprises a base 101 and the cover 102. The enclosure 100 is made from electrically insulating and mechanically stable plastic material, for instance acrylonitrile butadiene styrene (ABS). Figure 1A shows a perspective top view onto a telecommunication enclosure 100 (in short: enclosure) in its closed state, i.e. the cover 102 is fixed to the base 101. A firm connection between the base 101 and the cover 102 is achieved with four connection components 103a-d arranged at three sidewalls of the enclosure 100. On the fourth sidewall of the enclosure 100, the cover 102 is connected to the base 101 with a mechanical or electronic lock 104 that requires a mechanical or electrical key to be opened. As long as the lock 104 is closed, the cover 102 cannot be detached from the base 101.

The base 101 comprises mounting lugs 106a-d allowing for mounting the enclosure 100 to a wall of a building or the like. Electrical or optical cables (not shown in the drawing) enter into the interior of the enclosure 100 through passages 107a,b. In the interior of the enclosure 100, the cables are connected with one another and/or with further installation/connection devices (not shown). The passages 107a,b are tightened with seals to prevent environmental influences such as dust, humidity etc. from entering into the interior of the enclosure 100. For the same purpose a labyrinth seal 108 or a seal of elastic material is arranged between the base 101 and the cover 102 to protect the interior of the enclosure from the external environment.

A service person can open the enclosure for example during installation of the cable connection or during maintenance. To this end, the service person removes the lock 104 and the connection components at two sidewalls of the enclosure 100. Figure 1B depicts an exemplary situation in which connection components 103a-c are opened while connection component 103d remains in place. In this situation it is possible for the service person to hinge the cover 102 open by pivoting the cover 102 around the pivot axis that is parallel to the side wall where connection component 103d is arranged. In this case the connection component 103d functions as a hinge. Apparently, if instead of the connection component 103d the connection component 103a remains in place, then the cover 102 can be hinged open around the pivot axis that is parallel to the side wall where connection component 103a is installed. Finally, when the connection components 103a and 103b are removed instead of the connection components 103a-c, then the cover can be hinged open around a pivot axis that is parallel to the side wall where the connection components 103b and 103c are arranged. These use cases make it clear that the connection components 103a-d serve a dual purpose, namely as a fixing means to firmly connect the cover 102 with the base 101 and as a hinge enabling the cover 102 to pivot around a pivot axis defined by at least one of the connection components 103a-d. As a result, the cover 102 of the enclosure 100 can be hinged around three different pivot axis and thus simplifies its mounting and installation of cables inside the enclosure 100 in different situations. The pivot axis can be selected by the service person at any time during the installation of maintenance of the enclosure 100 serving as installation box. In addition to that, the pivot axis can be selected differently at any time as it will be explained further below.

In the following the functionality of the connection component 103a is explained in greater detail as an exemplary representative for all connection components 103a-d because the structure of all connection components 103a-d is identical.

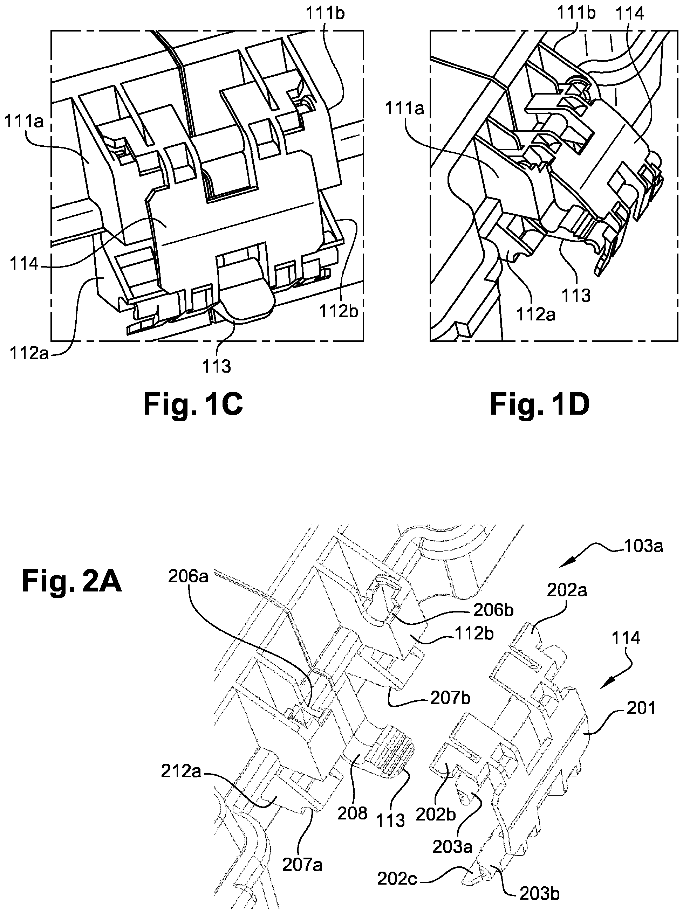

Figure 1C shows an enlarged view of the connection component 103a in a perspective view in its fully mounted state. The connection component 103a comprises three different parts, namely a pair of cantilevers 111a,b connected with the cover 102, a pair of cantilevers 112a,b connected with the base 101, an unlocking lever 113 attached to the base 101, and a connection bracket 114 that is selectively operative, firstly, as a locking member enabling the locking function of the connection component 103a, and, secondly, as a hinge member enabling the hinge function of the connection component 103a. The connection member 114 is a separate member apart from the base 101 or cover 102.

Figure 1D shows an enlarged view of the connection component 103a in a perspective view in a partially unmounted state after the unlocking lever 113 has been pressed down by a user.

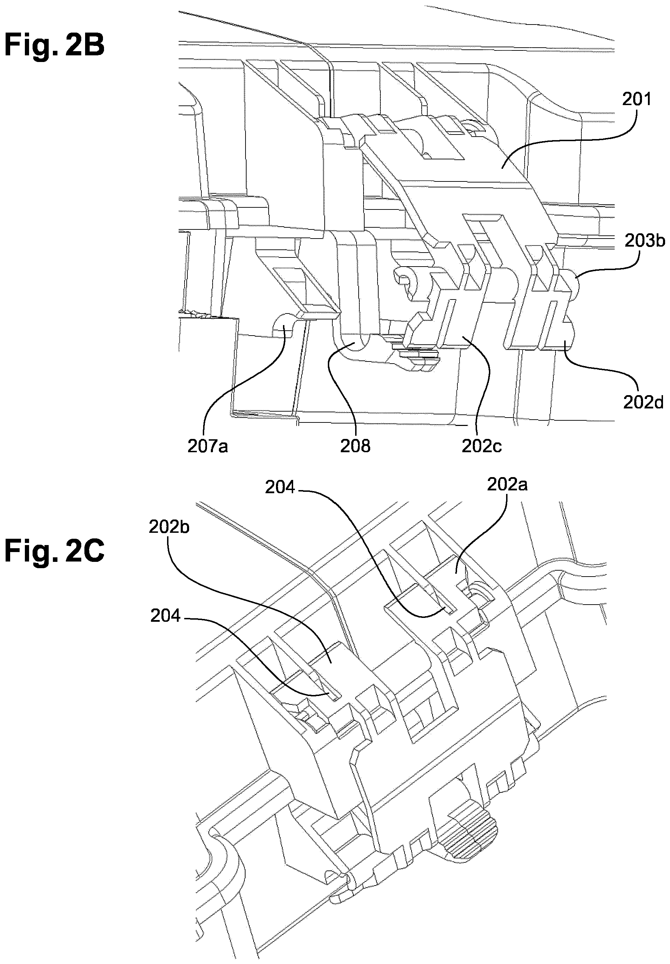

The connection component 103a will be explained in greater detail with reference to Figures 2A-C. Figure 2A shows the connection component 103a when the connection bracket 114 is not yet mounted. The connection bracket 114 comprises a middle piece 201 molded together with legs 202a-d and the first half-cylindrical interconnection axis 203a connecting the legs 202a and 202b and a second half cylindrical interconnection axis 203b connecting the legs 202c and 202d. Each leg 202a-d is provided with a slit 204 that accommodates one side wall of the cover cantilever 111a,b when the connection bracket 114 is hooked into the cover cantilevers 111a,b. The cover cantilevers 111a,b have support surfaces 206a,b on which the first half cylindrical interconnection axis 203a of the connection bracket 114 rests when the connection bracket 114 is hooked into the cover cantilevers 111a,b as it is shown in Figure 2B. The connection bracket 114 is pivotable around the half cylindrical interconnection axis 203a in a clockwise sense such that the second half cylindrical interconnection axis 203b can be snapped below a support surfaces 207a,b formed on the base cantilevers 112a,b and a support surface 208 provided on the unlocking lever 113 as shown in Figure 2C. In Figure 2C it is also visible that inner profiles of the cover cantilevers 111a,b are accommodated in the slits 204 of the legs 202a,b. The inner profiles of the base cantilevers 112a,b are accommodated in the slits 204 of the legs 202c,d in a similar fashion (not shown in the drawing). In this way the connection bracket 114 is form locked on the cover 111a,b and base cantilevers 112a,b. When the lock 104 is in place and all connection brackets 114 are mounted, then the cover 102 is firmly fixed to the base 101. In this situation the connection brackets 114 have a locking function. When a service person wants to access the interior of the enclosure 100, the service person removes the lock 104 and the connection brackets 114 on two sides of the enclosure such that the cover 102 can be hinged open around the pivot axis on the side of the enclosure where the connection bracket(s) 114 has or have not been removed.

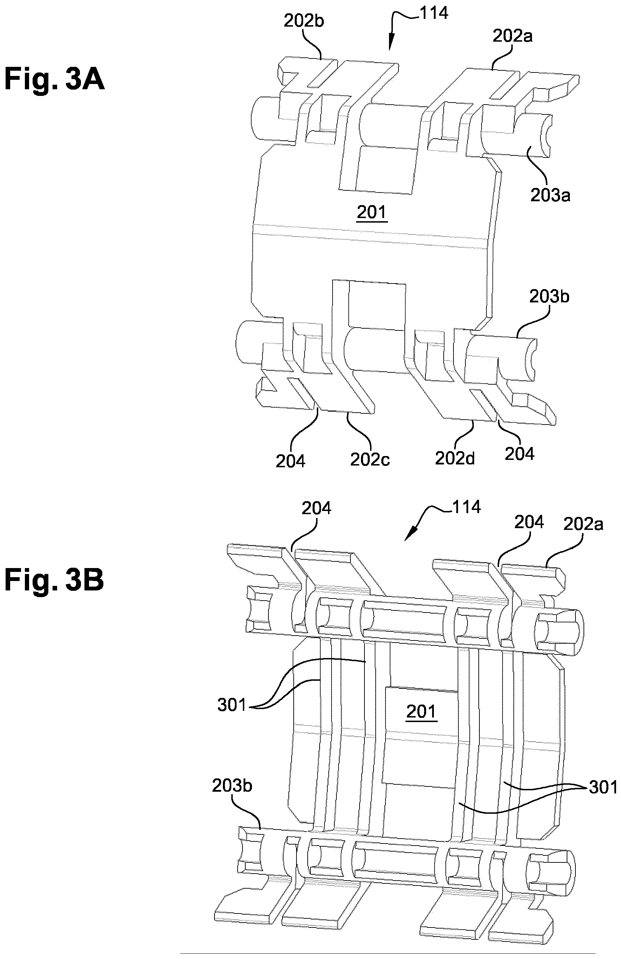

Figures 3A and 3B show an enlarged view of the connection bracket 114 from two different sides. On the side of the connection bracket 114 facing towards the enclosure 100 when the connection bracket is mounted on the cover and base cantilevers 111a,b and 112a,b there are reinforcement ribs 301 to increase the mechanical stability of the connection bracket 114.

In the claims, the word "comprising" does not exclude other elements or steps, and the indefinite article "a" does not exclude a plurality.

A single unit or device may perform the functions of multiple elements recited in the claims. The fact that individual functions and elements are recited in different dependent claims does not mean that a combination of those functions and elements could not advantageously be used.

### List of reference signs

- 100: enclosure
- 101: Base
- 102: Cover
- 103a-d: Connection components
- 104: Lock

- 106a-d: Mounting lug
- 107a,b: Cable passages
- 108: Labyrinth seal

- 111a,b: Cantilevers (cover)
- 112a,b: Cantilevers (base)
- 113: Unlocking lever
- 114: Connection bracket

- 201: Middle piece
- 202a-d: Leg
- 203a,b: Half cylindrical axis
- 204: Slit
- 206a,b: Support surface
- 207a,b: Support surface
- 208: Support surface

- 301: Reinforcement ribs

## Claims

1. Enclosure (100), in particular a telecommunication enclosure, comprising a base (101) and a cover (102), which is pivotably mounted on the base by a hinge **characterized in that**
the enclosure comprises on at least three sides connection components (103a-d) for connecting the cover (102) with the base (101) and that each connection component (103a-d) comprises a connection bracket (11) removably attached to the base and the cover allowing for a pivotable movement of the cover relative to the base when the connection bracket is attached to the base and the cover.

2. Enclosure according to claim 1, wherein on one or several of the three sides of the enclosure more than one connection component (103a-d) is provided.

3. Enclosure according to claim one or 2, wherein each connection bracket (114) comprises two interconnection axes (203a,b).

4. Enclosure according to one of the preceding claims, wherein cover cantilevers (111a,b) are arranged on the cover (102) and base cantilevers (112a,b) are arranged on the base (101) for interacting with the interconnection bracket (114).

5. Enclosure according to one of the preceding claims, wherein an unlocking lever (113) is provided to release the connection bracket (114).

6. Enclosure according to one of the preceding claims, wherein the connection bracket (114) comprises a middle piece (201) and legs (202a-d) interconnected by the interconnection axes (203a,b).

7. Enclosure according to one of the preceding claims, wherein the legs of the connection bracket have slits (204) for accepting a flat profile (111a,b;112a,b) connected with the cover (102) and the base (101), respectively.

8. Enclosure according to one of the preceding claims, wherein the cover and base cantilevers (111a,b;112a,b) are provided with freely accessible support surfaces (206a,b;207a,b) interacting with surfaces of the interconnection axes (203a,b) .

9. Enclosure according to claims 3 to 8, wherein the interconnection axes have a half cylindrical shape.

10. Enclosure according to one of the preceding claims, wherein a lock is provided on one of the sides of the enclosure.

11. Enclosure according to one of the preceding claims, wherein the enclosure is made from weather resistant and/or insulating plastic material.

12. Enclosure according to one of the preceding claims, wherein between the cover and the base of the enclosure a seal (108) is provided.
